# EUROPEAN PATENT APPLICATION

(11) **EP 2 606 719 A1**
(43) Date of publication of application: **26.06.2013**
(21) Application number: 12425034.1
(22) Date of filing: 17.02.2012
(51) Int. Cl.: A01K 1/015

(54) **Horse litter, especially for racing horses, made of recycled paper**

(30) Priority: 20.12.2011 IT SA20110025
(71) Applicant: Di Canto S.p.A., 84025 Eboli (SA) (IT)
(72) Inventor: Di Canto, Vito, Eboli (IT); Di Canto, Donato, Eboli (IT)

(57) **Abstract**

Litter material to be used in the activity of animal housing for sports use, especially for horses, produced from unsold yields of newspapers entirely made of paper 100%, having the form of rectangular strips and kept overlapping in a labile way in packages made of a number of paper strips, variable between 30 and 40, resulting from the folds or undulations and cuts along their longitudinal edges. The litter material has a good absorbent capacity equal at least to 3:1 of the water weight/initial weight of the material and enables to control odors. That once the material is exhausted, it assumes the chemical-physical characteristics of a fertilizer and is suitable to be used directly as a soil improver or as a main substrate in a composting process.The production process of litter material consists by drying preliminary stage a by a grinding stage with a single shaft shredder which performs the cut, followed by a removal stage of the dust produced by the cutting process; then, the material is packaged in hermetically sealed, plastic bags.

## Description

### Technical Field

The litter material of the present invention can be used in animal housing for sports use, especially for horses. The product, consisting of recycled paper strips, is able to provide high performance in terms of odorigenous impact and absorption capacity, by promoting optimal conditions for the management of livestock facilities and by limiting, at the same time, the drawbacks resulting from the use of conventional litters. The exhausted material may also be recovered in the agronomic field.

### Description

Within the activities of animal housing not directed toward the production of animal derivatives are expected to appeal to different types of litter, having a function to collect and manage the manure produced.

The materials usually used for this purpose is the straw or hay, however, are different the issues related to their use. The most striking feature, found in the breeding of horse stables, is related to the systematically ingestion of litter from the same animals, resulting in occurrence of physical complaints against the gastrointestinal system.

In light of these drawbacks, the operators of the sector increasingly tend to prefer the use of alternative materials, having performance characteristics comparable to conventional ones. The use of these materials, however, is not without its problems, very often related to the availability of the starting raw materials. An example in this sense is given by the litter-based wood shavings, which has been, to date, the alternative solution most frequently pursued in many riding centers. However, following the recent increase in demand for chips and pellets for feed heaters, the availability of shavings for litter, is in sharp decline, so as to particularly limit the supplies to the stables.

In parallel, the scientific studies have demonstrated the suitability of vegetable fibers (such as coconut fibers, hemp and flax) to be used as litter for the housing of horses. Although these materials are characterized by a satisfactory performance level, their transformation is affected negatively by the limited availability of starting materials, characterized by high supply costs.

Therefore, in technical-industrial field, there is a need to provide for new types of litter, consisting of materials capable of offering high performance standards and that they are the same time, easily available at low cost.

One possible solution in this sense could be the use of waste paper, considering the known ability of the absorbent material and the surplus that may be found in recent years for the market of pulp.

As to the applicant's knowledge, there are currently no patents on the subject that regards litter made exclusively from recycled paper to be used in stables for animals not intended for food. The patented products, findables at international level, are mainly intended for small domestic animals and are made of composite material, often containing chemical additives for odor control, in particular the U.S. patent 6276300 B1 - Ralston Purina Company provides a composition of paper, sawdust, and zeolite; the patents U.S. 0210173 and U.S. 0006035 A1/2008 A1/2010 - Profile Product'Ltd. both provides a composition of paper, wood, and surfactants.

### Objects and advantages of the invention

The product of this invention is, instead, consist exclusively of recycled paper and is a new and viable alternative, compared to a conventional litter that use straw and the recent solutions adopted in the stables, given the easy availability of materials basic raw, the high performance in terms of absorbency and release of odors, and the relative simplicity of management, especially for what concerns the stages of post-use.

In the present patent application has been developed a product to be used as litter in the stables of animals not destined for food production, which is composed exclusively of paper matrix, derived from yields of unsold newspapers. Due to the specificity of the basic raw material and to its particular structure, the material provides significant and obvious advantages, over other materials employed for the structure of the box, ie:
- The absence of systematic ingestion phenomena in the housing activity by animals resulting in improved health of the horses;
- Limited emission of dust during preparation of the litter;
- High absorption capacity;
- Reduced release of odorous compounds;
- No chemical additives potentially harmful to the environment;
- Easy management of the spent material;
- Possibility of use of the material spent on environmental issues;
- realization of composting process of the exhausted material;
- High availability of raw materials used in the production process;
- Use of cycle of relatively simple process.

Furthermore, the use of recycled paper-based litter is configured as a viable alternative for the improve of cellulosic materials of little value, contributing concretely to the implementation of the principles of environmental sustainability laid down at EU level and internationally.

### Detailed description of the invention

The fig. 1 schematically shows a package of rectangular strips of paper.

The fig. 2 shows a top view of a package with the various folds and cuts conferred.

The fig. 3 shows an embodiment of the package of sheets of paper for litter as taught in the present invention.

The product of this invention is obtained exclusively from the daily yields of newspapers.

Within the limits of the paper industry, the newspapers are considered as a matrix of cellulosic of the little value, however, the same exhibit necessary characteristics to be particularly suitable for processing in litter materials. The yields of unsold newspapers, in fact:
- following a continuous production cycle;
- Are available in large quantities and at low cost;
- Quality standards are constant over time;
- Their use, in the production process of the litter, it requires no preventive treatments, for the absence of impurities in the material;
- Are characterized by the absence of polluting compounds such as phenols, organochlorine compounds and organic solvents.

The litter, therefore, can be produced using a process cycle relatively simple, consisting essentially of a drying preliminary stage, then a grinding stage of the yields of newspapers with a single shaft shredder machine which performs the cut to obtain the size required, followed by a removal stage of the dust produced by the cutting process, then the material is loaded in the hopper via a conveyor belt, which feeds the bagging system of the end product. Important for the purposes of the present invention is the step of drying the paper, which also allows for microbiological decontamination, as well as contribute to give to the strips of paper those qualities of softness and strenght to the mechanical deformation.

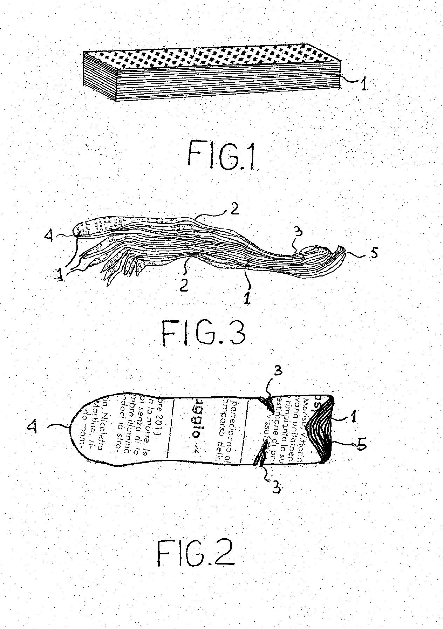

In particular, in a preferred embodiment, the step of grinding must be carried out in such a way as to ensure the obtaining of elements of regular form, on average equal to approximately 60 mm x 10 mm, each consisting of a number of strips of paper (1) variable between 30 and 40, for a total thickness which can vary, depending on the strips, from about 4 mm. to 5 mm. and kept overlapped in a labile way in package, resulting from the folds or undulations (2) and cuts (3), along their longitudinal edges. One end of the package of paper strips, has a rounded form, and that is what former tends to delaminate as displayed in Fig 3, while the other end has practically linear form and has a strenght at the exfoliation also due to the greater proximity of the cuts (3).

At the end of the processing cycle, the material thus obtained is packaged in plastic bags, tightly sealed and ready for use.

The litter, object of the present invention is characterized by low density, equal to approximately 100 kg/m3, which gives the product easy wielding and high softness, such as to ensure the appropriate comfort for the animals relaying. Laboratory tests show that the material exhibits a reduced content of chemicals, compatible with the limit values considered eligible for the treatment of cellulosic matrices in the paper industry as well as with the values generally found in paper products used for food use.

The experimental tests show, moreover, that the material retains and absorbs the ejection in an optimal way, limiting, therefore, the release of ammonia gas, known to be harmful to the respiratory system of the animal. The material, as obtained, in fact, has a good absorbent capacity, ranging from 2.2: 1 to 3:1, such as to ensure the appropriate hygienic - sanitary conditions of the boxes. It also is characterized by a reduced impact of the odors, as demonstrated by the low-emission factor of ammonia, that is 0.03 mgNH3/mg material three times lower than that normally exhibited by the conventional straw. The product, finally, shows no phytotoxic effects, inducing, on the contrary, to a stimulation of the growth of plant species examined (Sativum L.). In fact its use is advantageous also in reference to the problems in the management of exhausted litter. In that regard, in fact, it is appropriate to emphasize how the material exhausted is qualified to be used directly as a soil improver, datum its responsiveness to chemical-physical characteristics determined by the rules on fertilizers and is potentially suitable for use as main substrate in a process composting. In particular the value of C / N ratio that is equal to 30, highlights the availability of C org. and N in suitable proportions, such as to ensure an optimal course of the biological process. This allows the maximization of recovery of materials, in line with the environmental principles laid down at EU and international levels, thereby reducing costs related to disposal.

### Description of how to use

The litter material made of paper is particularly suitable for use in confined areas, or in the stables of animals not intended for food. For the purposes of use, the material is uniformly distributed on the bottom of the box by means of a fork, to form a layer having thickness ranging between 15 - 20 cm, while for the daily cleaning of the box is sufficient to remove only the affected part from litter , providing the amount removed to integrate with new material.

## Claims

1. Litter material to be used in the activity of animal housing for sports use, especially for horses, produced from unsold yields of newspapers and **characterized by** the fact that it is entirely made of paper, having the form of rectangular strips with a regular size, a length equal to about 60 mm, a width equal to about 10 mm, a total thickness varying between 4 and 5 mm and kept overlapping in a labile way in packages made of a number of paper strips, variable between 30 and 40, resulting from the folds or undulations and cuts along their longitudinal edges.

2. Litter material to be used in the activity of animal housing for sports use, especially for horses, as in claim 1) **characterized in that** one end of the package of paper strips has a rounded form, while the other end has a practically linear form.

3. Litter material to be used in the activity of animal housing for sports use, especially for horses as in claim 1) **characterized in that** it has a density of about 100 kg/m³.

4. Litter material to be used in the activity of animal housing for sports use, especially for horses as in claim 1) provided with an absorbent capacity equal at least to 3:1 of the water weight/initial weight of the material.

5. Litter material to be used in the activity of animal housing for sports use, especially for horses as in claim 1) **characterized by** a low factor of ammonia emission, equal to 0,03 mg_{NH3}/mg of the material, which enables to control odors.

6. Litter material to be used in the activity of animal housing for sports use, especially for horses as in claim 1) **characterized by** the fact that once the material is exhausted, it assumes the chemical-physical characteristics of a fertilizer and is suitable to be used directly as a soil improver or as a main substrate in a composting process, having a C/N ratio value equal to 30, which highlights the availability of C and N org. in suitable proportions.

7. Production process of the litter material to be used in the activity of animal housing for sports use, especially for horses, **characterized in that** the packages of the rectangular strips having a regular size, a length equal to about 60 mm, a width of about 10 mm, a total thickness variable between 4 and 5 mm and kept overlapping in a labile way and in a number of paper strips, variable between 30 and 40, resulting from the folds and cuts along their longitudinal edges, are obtained as a result of a purely mechanical process, consisting of a drying preliminary stage of the newspaper, also for the purpose of killing the possible presence of bacteria, by a grinding stage with a single shaft shredder which performs the cut, followed by a removal stage of the dust produced by the cutting process; then, the material is loaded into the hopper via a conveyor belt, which feeds the bagging system of the end product, and is packaged in hermetically sealed, plastic bags.
